# EUROPÄISCHE PATENTANMELDUNG

(11) **EP 3 172 995 A1**
(43) Veröffentlichungstag der Anmeldung: **31.05.2017**
(21) Anmeldenummer: 15196226.3
(22) Anmeldetag: 25.11.2015
(51) Int. Cl.: A47J 17/16

(54) **GERÄT ZUM SCHÄLEN VON OBST UND GEMÜSE**

(71) Anmelder: Lu, Cong Qiang, Taizhou City, Zhejiang (CN)
(72) Erfinder: Lu, Cong Qiang, Taizhou City, Zhejiang (CN)
(74) Vertreter: Schulte & Schulte

(57) **Zusammenfassung**

Ein handbetätigtes Gerät zum Schälen von Obst oder Gemüse weist ein Plateau 3 und ein Ständerwerk 2 auf. In der Traverse 6 des Ständerwerks 2 befindet sich ein Lager 11, das zwischen einer Führungs- und einer Freigabeposition für einen Bolzen 7 verstellbar ist, der seinerseits nach unten in Richtung Plateau 3 in gleichzeitige Rotation und Längsverschiebung und nach oben in seine Ausgangsposition ausschließlich per Längsverschiebung verstellbar ist.

## Beschreibung

Die Erfindung betrifft ein handbetätigtes Gerät zum Schälen von Obst oder Gemüse.

Es sind diverse handbetätigte Geräte bekannt, mit denen das Schälen von Obst oder Gemüse vereinfacht und für den Handhabenden auch sicherer werden soll. Ziel ist darüber hinaus ein hoher Grad an Effektivität beim Schälen, d. h. es gilt ein ungleichmäßiges, unrundes Schälergebnis und damit zu vermeiden, dass an der entfernten Schale etwa zu viel Fruchtfleisch hängen bleibt und dass auf diese Weise Obst vergeudet wird. Bekannt sind daher Geräte, in die das Schälgut in Form von Obst oder Gemüse im weiteren Sinne eingeklemmt wird, um dann die Schälbewegung ausüben zu können. Bekannt ist solch ein Gerät etwa aus den CN 201720883 U. Dabei wird ein drehbar gelagerter Schneidteller auf einer schienenartigen Konstruktion in Richtung Schälgut gefahren. Über eine Handhabe wird dieser Schneidteller dann in Rotationen versetzt und dabei an der zu bearbeitenden Stelle an einer Schneide an einer gegenüberliegenden Wandung vorbeigeführt. Die Kontrolle beim Schneidvorgang ist allerdings unzureichend, was letztlich die Funktion solch eines Gerätes maßgeblich beeinträchtigt, sodass keine zufriedenstellenden Schneidergebnisse mit gleichmäßig starker Schale erreicht werden können. Es kommt hinzu, dass ein Demontieren der im Betrieb verschmutzten Bauteile und deren Säuberung recht kompliziert ist, was naturgemäß im Haushalt immer wieder dazu führt, dass derartige Gerätschaften auf Dauer im Küchenschrank verschwinden und auf klassische Schälmittel wie Küchenmesser zurückgegriffen wird.

Es stellt sich der vorliegenden Erfindung die Aufgabe, ein handbetätigtes Gerät zum sicheren, schnellen und effektiven Schälen von Obst oder Gemüse zu schaffen, dessen Einzelteile sich darüber hinaus leicht säubern lassen.

Diese Aufgabe wird gemäß der Erfindung dadurch gelöst, dass das handbetätigte Gerät ein zur Aufnahme des Schälgutes dienendes Plateau und ein Ständerwerk mit zwei senkrechten, über eine Traverse miteinander verbundenen Trägern aufweist, in dem ein an seinem unteren Ende einen Klemmmechanismus für das Schälgut aufweisender Bolzen in Richtung seiner Längsachse verstellbar geführt ist, wobei der Bolzen in seine Arbeitsstellung und damit in Richtung Plateau in gleichzeitige Rotation und Längsverschiebung verstellbar ist und in die Traverse ein zwischen einer Führungsposition und einer Freigabeposition für den Bolzen verstellbares Lager integriert ist, das nach Beendigung des Schälvorgangs ein Rückstellen des Bolzens in seine Ausgangsposition ausschließlich per Längsverschiebung ermöglicht.

Das erfindungsgemäße Schälgerät verfügt über ein Plateau zur Auflage des Schälgutes in Form des Obstes oder Gemüses mit einem Ständerwerk mit zwei senkrechten, über eine parallel zu dem Plateau angeordnete Traverse verbundenen Trägern. Diese Traverse wiederum dient zur Aufnahme eines Bolzens, der an seinem unteren Ende einen Klemmmechanismus für das Schälgut aufweist, der dazu dient, das Obst oder Gemüse beim Schälen sicher zu führen. Im Zusammenspiel mit in das Plateau integrierten Schneiden führt eine Drehung des Bolzens samt Klemmmechanismus dazu, dass das Schälgut beim Drehen des Bolzens so an den Schneiden und/oder Schäleisen des Plateaus vorbeigeführt wird, dass der Schälvorgang schnell, effektiv und sicher ohne die Gefahr von Verletzungen abläuft. Aus einer Ausgangsstellung gelangt der in der Traverse gelagerte Bolzen dazu in seine Arbeitsstellung und damit nach unten in Richtung Plateau, dies bei gleichzeitiger Rotation und Längsverschiebung des Bolzens, bis das Schälgut dann zwischen dem Klemmmechanismus und dem Plateau eingeklemmt ist und bearbeitet werden kann. Nach Beendigung des Schälvorgangs kann der Bolzen aus der Arbeitsstellung in die Ausgangsposition zurückgestellt werden. Dies erfolgt per reiner Längsverschiebung dank eines in die Traverse integrierten Lagers. Dieses Lager ermöglicht bzw. unterstützt es in einer Führungsposition, dass der Bolzen durch eine Kombination aus Längsverschiebung und Rotation aus seiner Ausgangs- in die Arbeitsstellung verstellt wird, während nach Beendigung des Schälens der Bolzen leicht wieder verstellt bzw. demontiert werden kann, indem das Lager den Bolzen so freigibt, dass dieser ausschließlich in Längsrichtung verstellt wird.

Was den Antrieb für den Bolzen betrifft, so wird vorgeschlagen, dass in die Traverse ein Kegelradgetriebe integriert ist, das über eine erste Handhabe bedienbar ausgebildet ist. Das Kegelradgetriebe dient folglich dazu, ein Drehmoment von einer ersten Handhabe des Gerätes letztlich in eine Rotation des Bolzens zu überführen, was mit dessen Verstellen nach unten in Richtung Plateau einhergeht.

Konkret gestaltet sich dies so, dass die erste Handhabe dazu dient, ein erstes Kegelrad um eine horizontale Achse in Rotation und damit ein zweites, mit dem ersten Kegelrad in Eingriff stehendes Kegelrad um eine mit der Längsachse des Bolzens zusammenfallende vertikale Achse in Rotation und in Längsverschiebung zu versetzen. Mit Zwischenschaltung des ersten Kegelrades treibt die Handhabe also das zweite Kegelrad an. Dessen Rotation geht in eine kombinierte Rotation und Längsverschiebung des Bolzens nach unten in Richtung Plateau einher, weil zweites Kegelrad und Bolzen sich in Abhängigkeit voneinander drehen. Die Handhabe wird dabei so lange betätigt, bis der Bolzen samt an seinem unteren Ende vorgesehenem Klemmmechanismus so weit seine Arbeitsstellung eingenommen hat, dass es dann im Zusammenspiel mit den Schneiden am Plateau zur Bearbeitung des Obstes oder Gemüses kommt. Behutsam passt sich dabei der Bolzen mit seinem Klemmmechanismus an das Schälgut dank der besonders vorteilhaften Kombination aus Rotation und Längsverschiebung nach unten an.

Zur Übertragung der Drehmomente von der Handhabe auf den Bolzen ist daran gedacht, dass das zweite Kegelrad mindestens eine Führungsflanke zur Übertragung von Drehmomenten auf den Bolzen aufweist.

Dies macht nur bei einer korrespondierenden Ausbildung des Bolzens Sinn, weswegen ergänzend vorgesehen ist, dass der Bolzen ein durch mindestens eine, vorzugsweise zwei Führungsflanken an zwei gegenüber liegenden Längsseiten unterbrochenes Gewinde aufweist. Das Bolzengewinde erstreckt sich also in zwei durch die jeweiligen Flanken unterbrochenen Abschnitten über jeweils etwa 100° bis 120°. An den dazwischen verbleibenden Flanken wird über das Kegelradgetriebe die Rotation übertragen. Wird also das zweite Kegelrad in Rotation versetzt, dreht sich der Bolzen dank dieser Zwangsführung mit.

Eine besondere Bedeutung für das erfindungsgemäße handbetriebene Schälgerät fällt dem zwischen einer Führungs- und einer Freigabeposition für den Bolzen verstellbaren Lager zu. Dieses Lager gewährleistet eine Rotation des Bolzens bei gleichzeitiger Längsverschiebung nach unten in Richtung Plateau beim Verstellen des Bolzens in diese Arbeitsstellung. Dafür gibt das Lager den Bolzen aber bei der Rückstellung in die Ausgangsposition frei, sodass eine reine und den ganzen Ablauf stark beschleunigende Längsverschiebung ausgeübt werden kann, zumal dabei etwa keine Anpassung an das Schälgut mit einer entsprechend behutsamen Kombination aus Rotation und Längsverschiebung nach unten mehr fällig ist. Stattdessen kann der Bolzen leicht in seine Ausgangsposition zurückgezogen werden. Es empfiehlt sich daher, dass das Lager eine mit einem Innengewinde versehene Nuss aufweist, welche zwischen einer Führungsposition und einer Freigabeposition für den Bolzen verstellbar ist.

Das Lager in Form der Nuss muss leicht und sicher zwischen der Führungs- und der Freigabeposition für den Bolzen verstellt werden können. Wenn die Nuss zwei quer zur Längsachse des Bolzens verstellbare Nusshälften aufweist, die in der Führungsposition aneinander liegen und miteinander das Gewinde bilden und dann in der Freigabeposition auseinandergezogen werden können, ist eine besonders vorteilhafte Ausführungsform für solch einen Mechanismus verwirklicht.

Zur Verstellbarkeit der Nuss und zum Auseinanderziehen der beiden Nusshälften ist vorgesehen, dass die Nuss über eine der Traverse zugeordnete Deckelplatte zwischen ihrer Führungsposition und ihrer Freigabeposition verstellbar ausgebildet ist. Das Betätigen dieser Deckelplatte beispielsweise in Form einer Drehung führt dazu, dass die beiden Nusshälften auseinandergezogen werden, das Lager öffnet sich aus der Führungs- in die Freigabeposition und der Bolzen kann ohne Widerstand hochgezogen werden. Dabei bildet der Deckel vorteilhafterweise gleichzeitig den oberen Abschluss der Traverse.

Es wurde bereits angesprochen, dass die beiden Teile der Nuss bei Verdrehung der Deckelplatte auseinandergezogen werden, sodass eine auf den Deckel ausgeübte Dreh- in eine translatorische Bewegung der beiden Nusshälften überführt werden kann.

Solch ein Mechanismus ist etwa realisiert, wenn die beiden Teile der Nuss an ihrer der Deckelplatte zugewandten Oberseite jeweils einen Führungsstift aufweisen, welcher in einer der Deckelplatte zugeordneten Kulisse geführt ist. Bei Drehen der Deckelplatte sind also der Nuss zugeordnete Führungsstifte, genauer gesagt pro Nusshälfte jeweils ein Führungsstift in der deckseitigen Kulisse geführt, sodass genau genommen zur Überführung der Dreh- in die translatorischen Bewegungen deckelseitig eine Kulisse und nussseitig zwei Stifte dienen. Alternativ können die Führungsstifte der Deckelplatte und die Kulisse der Nuss zugeordnet ist.

Damit auf den Deckel die Drehbewegung zum Auseinanderziehen der Führungsstifte ausgeübt werden kann, ist es z. B. zweckmäßig, wenn die Kulisse durch mindestens eine bogenförmige Ausnehmung gebildet ist. Die Kulisse weist also in Relation einen großen Radius auf, sodass das Drehen des Deckels die Stifte auseinanderzieht.

Eine besonders vorteilhafte Ausführungsform der Erfindung sieht damit vor, dass die bogenförmigen Ausnehmungen so positioniert sind, dass die Führungsstifte in einer mit der Nuss in deren Freigabeposition korrespondierenden Stellung weiter voneinander entfernt sind als in deren mit der Führungsposition korrespondierenden Stellung. Weiter voneinander entfernt meint also hier, dass in der Freigabeposition der Bolzen durch Auseinanderverschiebung der beiden Nusshälften aus der Nuss ausgeklinkt ist.

Die erste Handhabe, die dazu dient, dass Kegelradgetriebe und damit den Bolzen in Richtung Arbeitsstellung in Gang zu setzen, wurde bereits vorgestellt. Ergänzend dazu ist vorgesehen, dass die Traverse eine zweite Handhabe aufweist, die ein manuelles Rückstellen des Bolzens in seine Ausgangsposition ausschließlich per Längsverschiebung ermöglicht. Betätigt werden kann diese Handhabe in Verlängerung des Bolzens nach Verdrehung des Deckels, mit der eine Verstellung der Nuss in die Freigabeposition einhergeht, was dann die Betätigung der zweiten Handhabe als Verlängerung des Bolzens per reiner Längsverschiebung erst ermöglicht.

Was die Ausbildung des Plateaus zur Ablage bzw. Aufnahme des Schälgutes in Form von Obst oder Gemüse betrifft, sieht eine weitere Ausführungsform der Erfindung vor, dass das Plateau mit mindestens einem Schäleisen ausgerüstet ist, welches sich in einem spitzen Winkel zu dem Plateau erstreckt und das so ausgerichtet ist, dass es bei Verdrehung des Bolzens und damit des Schälgutes zu dem beabsichtigten Schäleffekt kommt.

Die Erfindung sieht außerdem vor, dass das Plateau mindestens eine Schneide mit einer Mehrzahl von Schneidkörpern aufweist, die vorzugsweise in der Art kleiner nebeneinander positionierter Pyramiden erstrecken.

Die Erfindung zeichnet sich insbesondere dadurch aus, dass ein handbetriebenes Gerät zum schnellen, effektiven und sicheren Schälen von Obst oder Gemüse geschaffen ist, das sich zudem leicht in einzelne Bauteile demontieren und folglich gut wieder reinigen lässt. Dazu besteht das erfindungsgemäße Küchengerät aus einem rahmenartigen Gehäuse, gebildet durch eine auf dem Boden zu positionierende Traverse mit zwei sich an deren Enden senkrecht erstreckenden Trägern, die dann in einer parallel zu dem Plateau verlaufenden Traverse miteinander verbunden sind. Die Traverse weist eine Öffnung auf, in der ein Bolzen gelagert ist, der wiederum an seinem unteren Ende einen Klemmmechanismus für das zu schälende Obst oder Gemüse aufweist. Ein Witz der Erfindung liegt darin, dass dieser Bolzen behutsam nach unten in seine Arbeitsstellung in Richtung Plateau durch eine Rotations-/Längsbewegung verstellt werden kann, bis es an dem beschriebenen Klemmmechanismus zur Ausübung einer Schälbewegung auf das Schälgut kommt. In diese Arbeitsstellung gelangt der Bolzen durch Betätigung eines ersten Mechanismus mit einem Kegelgetriebe. Ein Klemmmechanismus zwischen dem um eine senkrechte und mit der Längsachse des Bolzens zusammenfallende Achse drehbaren Kegelrades ermöglicht dabei die Übertragung von Drehmomenten von der Handhabe über das Kegelradgetriebe auf den Bolzen, der dazu eine entsprechende Unterbrechung seines Gewindes aufweist. Dabei ist der Bolzen in dem Gewinde des als Nuss ausgebildeten Lagers geführt. Nach Abschluss des Schälens kann der Bolzen dann in einer einfachen Längsverschiebung wieder in seine Ursprungsbewegung zurückgesetzt werden. Verantwortlich dafür ist das als Nuss ausgebildete und in die Traverse integrierte Lager mit Innengewinde. Diese Nuss umfasst zwei Hälften, die bei einer Betätigung eines Deckels in der Traverse auseinandergezogen werden, sodass die beiden Gewindehälften an der Innenseite der Nuss den Bolzen freigeben; der Bolzen kann zurück in seine ursprüngliche Position gezogen werden.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: ein handbetätigtes Gerät in Draufsicht,
- Figur 2: die perspektivische Ansicht des Bolzens,
- Figur 3: einen Schnitt zu Figur 1,
- Figur 4: eine Vergrößerung zu Figur 3,
- Figur 5: Einzelteile eines Gerätes,
- Figur 6: ein Kegelrad,
- Figur 7: eine Nuss,
- Figur 8: eine Deckelplatte und
- Figur 9: eine Draufsicht auf das Gerät, teilweise im Schnitt.

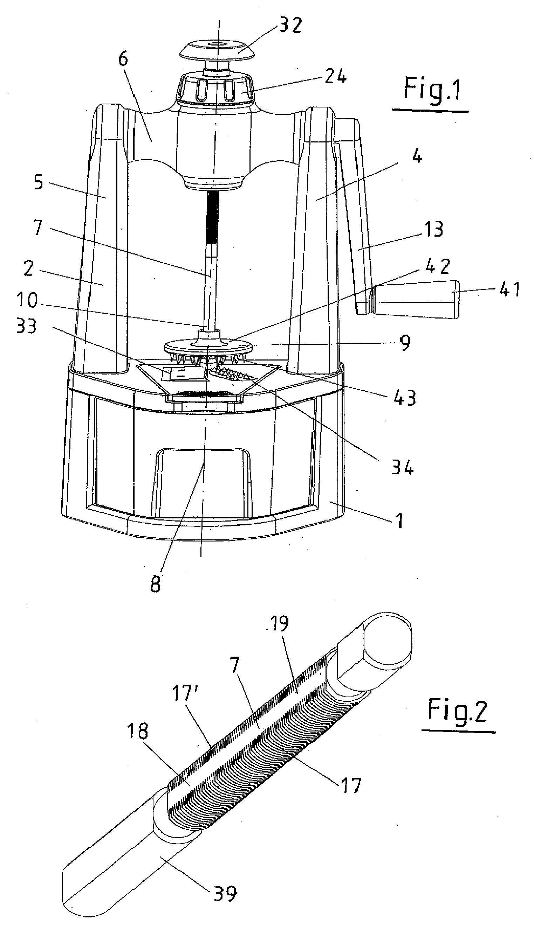

Figur 1 zeigt ein erfindungsgemäßes Gerät 1 mit einem Ständerwerk 2, gebildet durch ein parallel zur Auflagefläche ausgebildetes Plateau 3, von dem sich zwei Träger 4 und 5 senkrecht erstrecken und dann in einer waagerechten, d. h. zum Plateau 3 parallelen Traverse 6 wieder zusammengeführt werden. An den Träger 4 bzw. die Traverse 6 ist eine Handhabe 13 angeschlossen, deren Verschwenken bei Betätigung des Griffs 41 in eine Drehung und Längsverschiebung des Bolzens 7 um seine Längsachse 8 übergeht. Am unteren Ende 10 des Bolzens 7 befindet sich ein Klemmmechanismus 9 in Form einer Art Teller 42 mit darunter positionierten Klemmzähnen, von denen einer beispielhaft mit Bezugszeichen 43 versehen ist und die maßgeblich dazu dienen, das Schälgut (Obst oder Gemüse) zu halten bzw. zu fixieren. In die Traverse 6 integriert ist das hier nicht erkennbare Lager. Dargestellt ist allerdings der Deckel 24, der zur Verstellung dieses Lagers zwischen seiner Führungs- und Freigabeposition dient. Zweck der Handhabe 32 ist ein Ziehen des Bolzens 7 nach oben in seine Ausgangsposition zurück nach entsprechender Verstellung des Lagerns in seine Freigabeposition.

Der Schwerpunkt in Figur 2 liegt auf der Ausbildung des Bolzens 7 in Form des zweifach unterbrochenen Gewindes 17, 17' in Form der Führungsflanke 18 an der Längsseite 19 des Bolzens 7, um eine Abhängigkeit zwischen Kegelgetriebe und Bolzen in Form der Übertragung der Drehmomente auf den Bolzen 7 bei Betätigung der ersten Handhabe zu gewährleisten. Neben dem Gewinde 17 weist der Bolzen 7 noch einen Bolzenteil 39 ohne Gewinde auf.

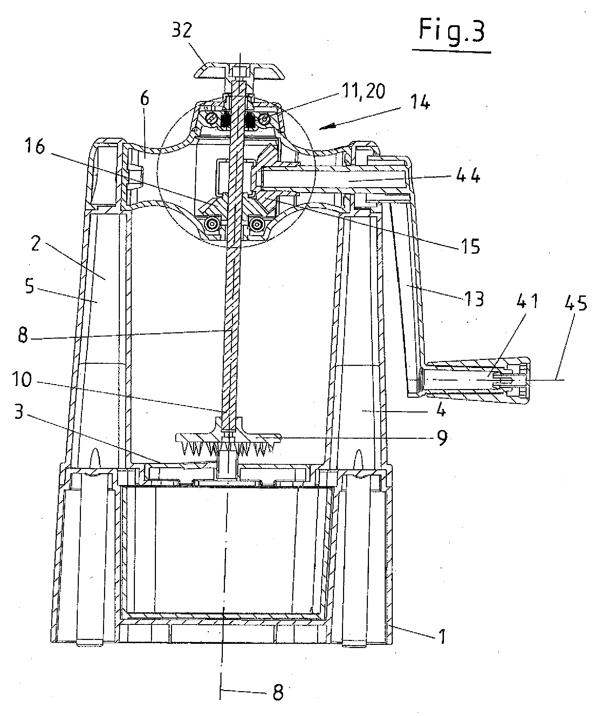

Einen Längsschnitt durch das Gerät 1 zeigt dann Figur 3. Gut erkennbar ist das Kegelradgetriebe 14 mit dem um eine horizontale Achse 45 drehbaren ersten Kegelrad 15 und dem um eine vertikale, mit der Längsachse 8 des Bolzens 7 zusammenfallenden Achse drehbaren Kegelrad 16. Somit geht ein Schwenken des Griffs 41 um die Achse des Bolzens 44 über das erste Kegelrad 15 und das zweite Kegelrad 16 in eine Rotation des Bolzens 7 über.

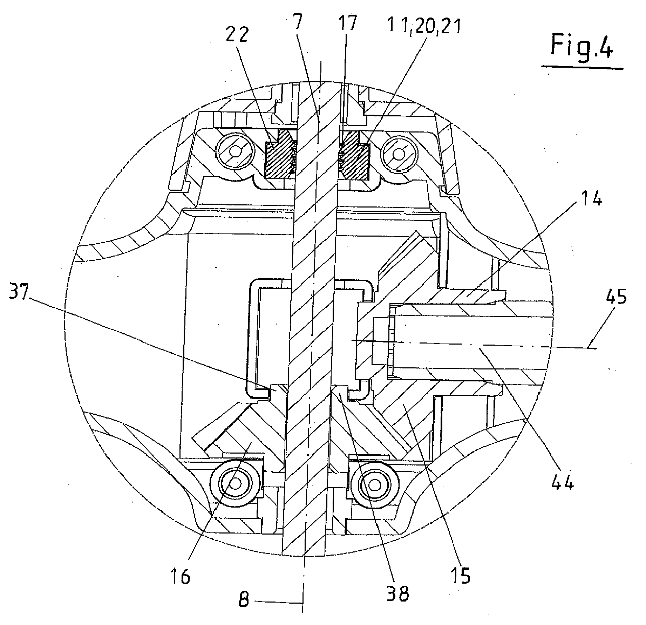

Genauer gezeigt ist dieser Mechanismus in Figur 4. Der Bolzen 44 dreht sich bei Betätigung der Handhabe um seine Achse 45, woraufhin sich das ebenfalls um die Achse 45 drehbare erste Kegelrad 15 und damit das zweite um die Achse 8 rotierende Kegelrad 16 drehen. Dies geht wegen der Führungsflanken 37, 38 in eine Rotation des Bolzens 7 über. Dieser Bolzen 7 ist zusätzlich in dem als Nuss 20 ausgebildeten Lager 11 geführt. Von diesem erkennbar ist das Innengewinde 17 zur Führung des Bolzens 7 in dessen Führungsposition.

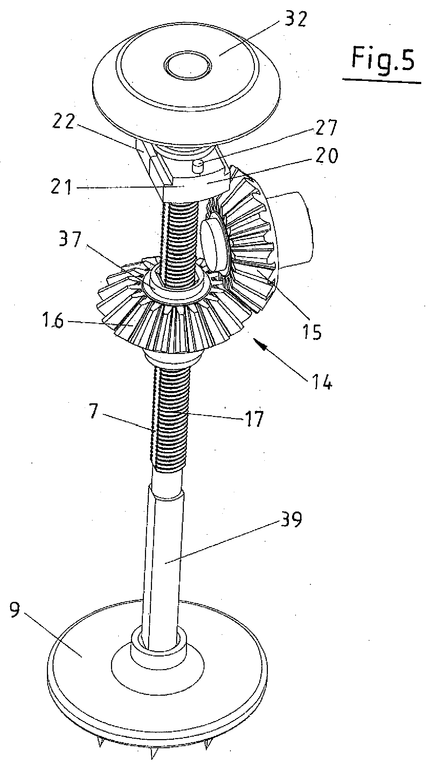

Wichtige Bauteile demonstriert zusätzlich Figur 5 mit dem ersten Kegelrad 15 und dem zweiten Kegelrad 16. Führungsflanken 18 bolzenseitig und Führungsflanken 37 kegelradseitig ermöglichen eine Übertragung des letztlich auf den hier nicht dargestellten Griff ausgeübten Drehmomentes auf den Bolzen 7, der darüber hinaus mit seinem Gewinde 17 oben in der Nuss 20 geführt ist. Letztere befindet sich hier in ihrer Führungsposition, d. h. der Bolzen kann nicht über Ziehen der Handhabe 32 allein durch Längsverschiebung verstellt werden, hierzu müssten die beiden Teile 21, 22 der Nuss zuvor auseinander gezogen werden.

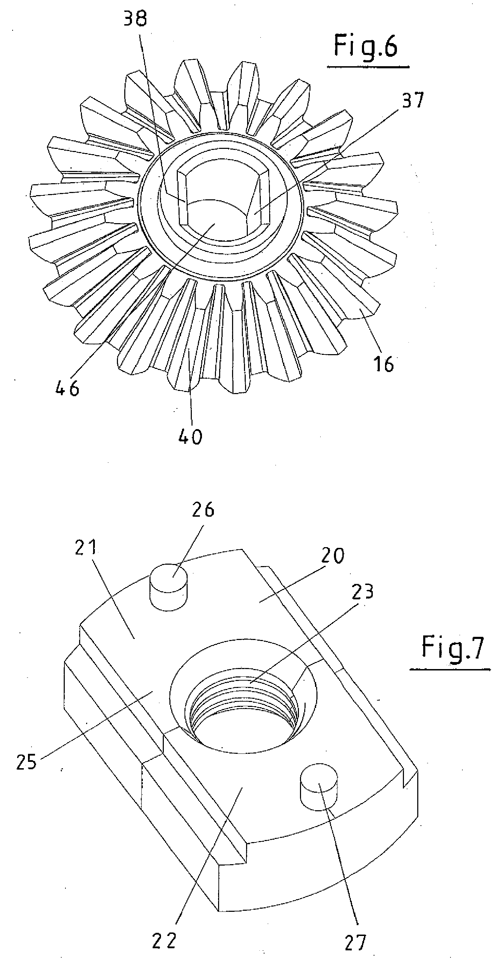

Das zweite Kegelrad 16 des Kegelradgetriebes zeigt Figur 6 mit einer beispielhaft mit dem Bezugszeichen 40 versehenen Getriebestufe. Innen zur Öffnung 46 hin umfasst das Kegelrad 16 zwei gegenüberliegende Führungsflanken 37, 38, die mit den bolzenseitigen Führungsflanken korrespondieren. Bei Drehung des Kegelrades 16 kann also der hier dargestellte Bolzen gar nicht anders als mitzudrehen.

Besondere Bedeutung kommt dem Lager 11 zu, das als Nuss 20 in Figur 7 dargestellt ist. Die Nuss 20 verfügt über ein Innengewinde 22, das mit dem Außengewinde des hier nicht dargestellten Bolzens korrespondiert, sodass dem in Figur 7 gezeigten Zustand, welcher der Führungsposition der Nuss 20 entspricht, eine Rotation dank des Gewindes 23 unumgänglich ist. Um nun die Nuss 20 in die Freigabeposition für den Bolzen zu verstellen, werden die beiden Nusshälften 21, 22 auseinandergezogen, sodass das Gewinde 23 freiliegt und nicht mehr zur Zwangsführung des Bolzens dient. Hier kommen die beiden Führungsstifte 26, 27 an der Oberseite 25 der Nuss 20 ins Spiel, indem sie Angriffspunkte für die Kulisse des Deckels bilden.

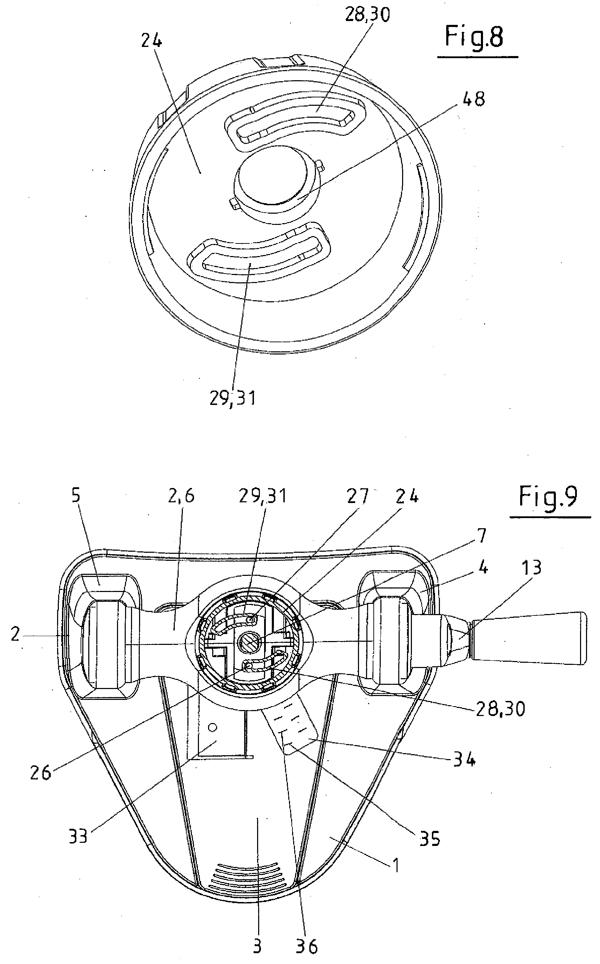

Das zeigt Figur 8. Die Deckelplatte 24, durch deren Öffnung 48 der Bolzen geführt ist, umfasst zwei bogenförmig ausgebildete Ausnehmungen 30, 31 in Form der Kulisse 28, 29. Diese Ausnehmungen 30, 31 weisen eine gewisse Längserstreckung auf, sodass eine Drehung des Deckels 24 zu einem Auseinanderziehen der in der vorherigen Figur gezeigten Führungsstifte an der Oberseite der Nuss führt, was wiederum ein Auseinanderziehen der beiden Nusshälften und damit einen Übergang der Nuss in ihre Freigabeposition für den Bolzen bewirkt.

Schließlich zeigt Figur 9, teilweise im Schnitt, den Blick auf das erfindungsgemäße Schälgerät 1 von oben mit dem Ständerwerk 2 auf dem Plateau 3 vom der beiden Träger 4, 5 und der Traverse 6. Letztere veranschaulicht hier neben dem Bolzen 7 mit den Klemmflächen vor allem die deckelseitige Kulisse 28, 29 in Form der Ausnehmungen 30, 31. Erkennbar sind auch die Stifte 26, 27, die an der Oberseite der Nuss vorgesehen sind und die sich in der Darstellung nach Figur 9 in minimalem Abstand befinden, was mit einer Nuss in Führungsposition einhergeht. Wird der Deckel 24 nun gedreht, bewegen sich die Stifte 26, 27 gegenüber den Ausnehmungen 30, 31 so, dass sie eine Positionierung am gegenüberliegenden Ende einnehmen, was dann einen maximalen Abstand zwischen den beiden Führungsstiften 26, 27 und damit einer Nuss in Freigabeposition entspricht. Gut erkennbar sind in Figur 9 auch die Schneide 33 mit der Schneidkante 47 und die Schneide 34 mit den angedeuteten Schneidkörpern 35, 36 etc..

## Patentansprüche

1. Handbetätigtes Gerät (1) zum Schälen von Obst oder Gemüse mit einem zur Aufnahme des Schälgutes dienenden Plateau (3) und einem Ständerwerk (2) mit zwei senkrechten, über eine Traverse (6) miteinander verbundenen Trägern (4, 5), in dem ein an seinem unteren Ende (10) einen Klemmmechanismus (9) für das Schälgut aufweisender Bolzen (7) in Richtung seiner Längsachse (8) verstellbar geführt ist, wobei der Bolzen (7) in seine Arbeitsstellung und damit in Richtung Plateau (3) in gleichzeitige Rotation und Längsverschiebung verstellbar ist und in die Traverse (6) ein zwischen einer Führungsposition und einer Freigabeposition für den Bolzen (7) verstellbares Lager (11) integriert ist, das nach Beendigung des Schälvorgangs ein Rückstellen des Bolzens (7) in seine Ausgangsposition ausschließlich per Längsverschiebung ermöglicht.

2. Gerät nach Anspruch 1,
**dadurch gekennzeichnet,**
**dass** in die Traverse (6) ein Kegelradgetriebe (14) integriert ist, das über eine erste Handhabe (13) bedienbar ausgebildet ist.

3. Gerät nach Anspruch 2,
**dadurch gekennzeichnet,**
**dass** die erste Handhabe (13) dazu dient, ein erstes Kegelrad (15) um eine horizontale Achse (18) in Rotation und damit ein zweites, mit dem ersten Kegelrad (15) in Eingriff stehendes Kegelrad (16) um eine mit der Längsachse (8) des Bolzens (7) zusammenfallende vertikale Achse in Rotation und in Längsverschiebung zu versetzen.

4. Gerät nach Anspruch 1,
**dadurch gekennzeichnet,**
**dass** das zweite Kegelrad (16) mindestens eine Führungsflanke (37, 38) zur Übertragung von Drehmomenten auf den Bolzen (7) aufweist.

5. Gerät nach Anspruch 1,
**dadurch gekennzeichnet,**
**dass** der Bolzen (7) ein durch mindestens eine Führungsflanke (18) an mindestens einer Längsseite (19) unterbrochenes Gewinde (17) aufweist.

6. Gerät nach Anspruch 1,
**dadurch gekennzeichnet,**
**dass** das Lager (11) eine mit einem Innengewinde (23) versehene Nuss (20) aufweist, welche zwischen einer Führungsposition und einer Freigabeposition für den Bolzen (7) verstellbar ist.

7. Gerät nach Anspruch 6,
**dadurch gekennzeichnet,**
**dass** die Nuss (20) zwei quer zur Längsachse (8) des Bolzens (7) verstellbare Nusshälften (21, 22) aufweist.

8. Gerät nach Anspruch 6,
**dadurch gekennzeichnet,**
**dass** die Nuss (20) über eine der Traverse (6) zugeordnete Deckelplatte (24) zwischen ihrer Führungsposition und ihrer Freigabeposition verstellbar ausgebildet ist.

9. Gerät nach Anspruch 7,
**dadurch gekennzeichnet,**
**dass** die beiden Teile (21, 22) der Nuss (20) bei Verdrehung der Deckelplatte (24) auseinander gezogen werden.

10. Gerät nach Anspruch 9,
**dadurch gekennzeichnet,**
**dass** die beiden Teile (21, 22) der Nuss (20) an ihrer der Deckelplatte (24) zugewandten Oberseite (25) jeweils einen Führungsstift (26, 27) aufweisen, welcher in einer der Deckelplatte (24) zugeordneten Kulisse (28, 29) geführt ist.

11. Gerät nach Anspruch 10,
**dadurch gekennzeichnet,**
**dass** die Kulisse (28, 29) durch mindestens eine bogenförmige Ausnehmung (30, 31) gebildet ist.

12. Gerät nach Anspruch 11,
**dadurch gekennzeichnet,**
**dass** die bogenförmigen Ausnehmungen (30, 31) so positioniert sind, dass die Führungsstifte (26, 27) in einer mit der Nuss (20) in deren Freigabeposition korrespondierenden Stellung weiter voneinander entfernt sind als in deren mit der Führungsposition korrespondierenden Stellung.

13. Gerät nach Anspruch 1,
**dadurch gekennzeichnet,**
**dass** die Traverse (6) eine zweite Handhabe (32) aufweist, die ein manuelles Rückstellen des Bolzens (7) in seine Ausgangsposition ausschließlich per Längsverschiebung ermöglicht.

14. Gerät nach Anspruch 1,
**dadurch gekennzeichnet,**
**dass** das Plateau (3) mit mindestens einem Schäleisen (33) ausgerüstet ist, welches sich in einem spitzen Winkel zu dem Plateau (3) erstreckt.

15. Gerät nach Anspruch 14,
**dadurch gekennzeichnet,**
**dass** das Plateau (3) mindestens eine Schneide (34) mit einer Mehrzahl von Schneidkörpern (35, 36) aufweist.
